# EUROPÄISCHE PATENTANMELDUNG

(11) **EP 3 167 723 A1**
(43) Veröffentlichungstag der Anmeldung: **17.05.2017**
(21) Anmeldenummer: 16194574.6
(22) Anmeldetag: 19.10.2016
(51) Int. Cl.: A23C 19/14, A01J 25/12

(54) **VERFAHREN UND VORRICHTUNG ZUR HANDHABUNG VON KÄSELAIBEN**

(30) Priorität: 13.11.2015 CH 16522015
(71) Anmelder: Kalt Maschinenbau AG, 9604 Lütisburg (CH)
(72) Erfinder: Grüninger, Siegfried, 9011 St. Gallen (CH)
(74) Vertreter: Frommhold, Joachim

(57) **Zusammenfassung**

Die Erfindung betrifft ein Verfahren zur Handhabung von Käselaiben und eine Vorrichtung hierzu, die insbesondere einer sogenannten Kassettenpresse mit runden oder eckigen Käseformen zuordenbar ist. Erreicht werden soll ein schnelles Umladen von Käselaiben.

Hierzu wird gepresste Käserohmasse von der Innenwand einer Form (4) gelöst und nach einem Wendevorgang aus der Form (4) entleert, wobei die Form (4) gedreht, gesenkt und gerüttelt oder ausgeblasen wird.

Vor dem Rütteln oder Ausblasen fährt ein Abholstempel (16) in die Form (4) bis an den Käselaib ein, die Form (4) wird nachfolgend angehoben, gedreht und in die Käsepresse zurückgeführt.

Anschliessend wird der Abholstempel (16) mit dem Käselaib gesenkt und der Käselaib wird mittels einer Spanneinheit auf dem Abholstempel (16) fixiert, um 180° zu einer Sekundärform (14) hin geschwenkt und in diese geführt resp. gedrückt, die Spanneinheit anschliessend geöffnet und der Abholstempel (16) fährt ein.

## Beschreibung

Die Erfindung betrifft ein Verfahren zur Handhabung von Käselaiben und eine Vorrichtung hierzu, die insbesondere einer sogenannten Kassettenpresse mit runden oder eckigen Käseformen zuordenbar ist.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus' für die Formen. Verteilkopf wie Wendemechanismus müssen dabei manuell bereitgestellt resp. gewechselt werden. Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen. Die Kassetten haben eine spaltminimierende Randausbildung und zum schieben der Kassetten ist eine mechanisierte Einrichtung vorgesehen.

Der Wanne kann zudem eine Ablage für zweite Formen, in denen die gepressten Rohkäselaibe umgeladen werden, zugeordnet sein (EP-A-1769676). Die Formen können mittels einer Rollenfördereinrichtung einer entsprechenden Handhabungseinrichtung der Presse einem weiteren Arbeitsabschnitt zugeführt werden.

Nach der EP-B-543185 ist ein Formdeckel über eine Kippeinrichtung mit dem Pressstempel verbindbar (selbstzentrierend), so dass infolge möglicher Kippbewegungen ein Ansaugen des Formdeckels an der Käsemesse vermieden wird. Die Form selbst ist rund oder viereckig und kann aus einem äusseren Behälter und einem inneren, gelochten Mantel bestehen.

Die gepressten Käselaibe können zum Beispiel mittels eines Greifers aus der Form entnommen werden, wobei vorgängig Luft in die Pressform eingeblasen wird um den Käselaib von der Formwand zu lösen (EP-B-1269832 oder DE-B-922448).

Der Kontakt der Käselaibe mit eingeblasener Luft oder anderen Gasen kann ein Sanitationsproblem darstellen. Um dies zu meiden wurde auch versucht, Käselaibe mittels Vakuumgreifer aus der Pressform zu entnehmen. Dies führt jedoch zur Zapfenbildung oder allgemein zur Beschädigung der Oberfläche oder gar zum einreissen des Laibs.

Eine weitere derartige Kassettenpresse ist in der CH704208A2 und der EP2710888A1 veröffentlicht. Die Kassettenpresse gemäss der CH704208A2 weist zwei Handhabungseinrichtungen auf, wobei die zweite, entlang der Längsseiten der Wanne verfahrbare Handhabungseinrichtung mit einer Wendeeinheit korrespondiert.
Die EP2710888A1 offenbart eine Kassettenpresse, die mit einer Rütteleinheit versehen ist, die einer horizontal angeordneten Ablage oder Fördereinrichtung für die gepressten Käselaibe zugeordnet ist.

Der Erfindung liegt nun die Aufgabe zugrunde, ein Verfahren zur automatischen Handhabung von Käselaiben zu entwickeln, mit dem insbesondere eine schonende, schnelle und exakte Entformung/Einformung der Käselaibe von einer Primärform in eine Sekundärform erreicht werden kann.

Die Aufgabe ist mit den Merkmalen des Patentanspruchs 1 gelöst.

### Erfindungsgemäss erfolgt

a) ein Rütteln oder Blasen von, in einer Form, gepressten Käserohmasse, wobei vorgängig die Form resp. eine Kassette mit den darin angeordneten Formen gedreht und abgesenkt wird und ein Abholstempel bis an den Käselaib in die Form einfährt, wobei nach dem Rütteln der Abholstempel aus der Form ausfährt und diese in ihre Ausgangslage zurückgedreht wird,
b) entsprechend wird die Form ohne den, auf dem Abholstempel, aufliegenden Käselaib angehoben, um 180° gedreht und in die Käsepresse, insbesondere eine Kassettenpresse zurückgeführt,
c) nun wird der Abholstempel mit dem aufliegenden Käselaib gesenkt, und
d) der Käselaib wird mittels einer Spanneinheit auf dem Abholstempel fixiert,
e) so dass der Käselaib um 180° zu einer Sekundärform hin geschwenkt und in diese geführt werden kann, und anschliessend
f) wird die Spanneinheit geöffnet und der Abholstempel kann ausgefahren werden (oder der Abholstempel fährt zuerst aus).

Das ablösen des Käselaibs resp. der Käserohmasse von der inneren Wand der Form erfolgt durch ein Rütteln oder auch ein Ausblasen des gepressten Käselaibs unmittelbar resp. direkt vor der Entformung. Die Rüttelbewegung wird unmittelbar nach dem Wendevorgang der Form eingeleitet, damit jeder Käselaib danach auf einem Abholstempel aufliegen kann.

Eine Spezifizierung des erfindungsgemässen Verfahrens ist in den abhängigen Ansprüchen offenbart.

Die Rüttelung erfolgt nur kurzzeitig und mindestens einmal.
Die Rüttelbewegung kann horizontal oder vertikal erfolgen. Die Form wird dabei vorzugsweise in einen Rüttler abgesenkt.
Jeder Käselaib wird mit dem Abholstempel in die Sekundärform gestossen und das Schwenken des Käselaibs erfolgt bevorzugt mit einem Schwerikgreifer oder einem Wendegreifer. Hierbei dreht der Schwenk- oder Wendegreifer nach dem Einfahren des Abholstempels um 180° in seine Ausgangslage zurück.

Die Käselaibe werden nicht nur schonend sondern auch hygienisch entformt und weiter transportiert.

Eine weitere Aufgabe besteht darin, eine Vorrichtung zur Handhabung von Käselaiben zu schaffen, die ein schnelles Umladen von Käselaiben ermöglicht. Diese Aufgabe ist mit den Merkmalen des Patentanspruchs 8 gelöst.

Bevorzugte Ausführungsformen sind in den abhängigen Ansprüchen offenbart.

Die erfindungsgemässe Vorrichtung ist kompakt aufgebaut und ermöglicht ein automatisiertes Handhaben und insbesondere Greifen der Käselaibe und somit eine zügige Neubelegung der Kassettenpresse, da der Käse nur kurze Zeit in den Formen verweilen muss.

Die Erfindung wird nachfolgend in einem Ausführungsbeispiel anhand einer Zeichnung näher beschrieben. In der Zeichnung zeigen die
Fig. 1: eine Kassettenpresse in Teilansicht;
Fig. 2: die erfindungsgemässe Vorrichtung mit einem Schwenkgreifer;
Fig. 3: die erfindungsgemässe Vorrichtung mit einem Wendegreifer;
Fig. 4: ein Spannbalken der erfindungsgemässen Vorrichtung mit Wendegreifer;
Fig. 5: ein Spannbalken der erfindungsgemässen Vorrichtung mit Schwenkgreifer.

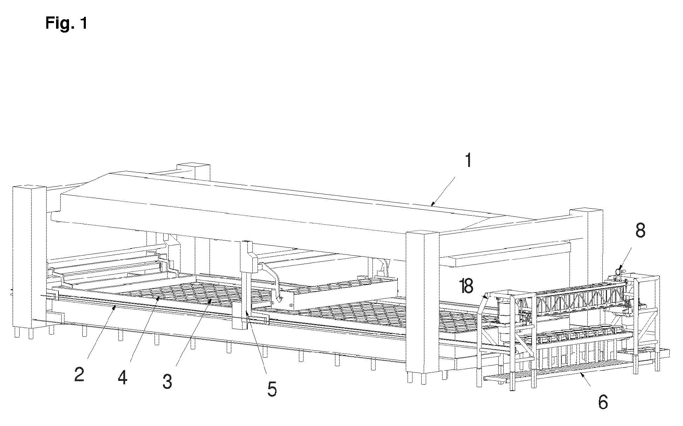

Eine Kassettenpresse 1 zum flüssigkeitsverringernden Pressen von Käserohmasse, umfasst unter Einbeziehung der Offenbarung der CH-A-704208 A und/oder der CH 706999 A
- eine in der Draufsicht rechteckige und oben offene Wanne 2 (Fig. 1) mit in der Draufsicht rechteckigen, oben offenen Kassetten 3, die in Reihen quer zur Längsrichtung der Wanne 2 nebeneinander angeordnet sind,
- Formen 4 zur Aufnahme der zu pressenden Käserohmasse, die in den Kassetten 3 angeordnet sind, wobei eine Form 4 Teil der Kassette 3 sein kann und zumindest einen Boden und einen Mantel mit mindestens einem Auslass für die abzupressende Flüssigkeit aufweist,
- auf den oberen Rändern, die die Aussenseiten des Kassettenblocks in der Wanne 2 in Längs- und Querrichtung bilden, können Randbleche in Höhe von einigen Zentimetern angeordnet sein, um ein einschwemmen der Käserohmasse (z. B. mittels eines Rohrverteilers o. a. Mittel) bis oberhalb der Kassettenoberkante zu ermöglichen,
- einen, auf Endsäulen gelagerten Presskopf mit einer Vielzahl, auf die Formen 4 ausgerichteten und nicht explizit dargestellten Pressstempel zum Pressen der Käserohmasse, z. B. entsprechend der Offenbarung der EP-B-543899 ausgebildet, sowie ggf. Niederhalter zum abdrücken des Presskopfes von den Kassetten 3,
- ein Rohrverteilsystem resp. einen Abfüllapparat zum Einschwemmen der Käserohmasse,
- mindestens ein Handlinggerät 5, das motorisch betrieben entlang der Längsseiten der Wanne 2 verfahrbar ist, zum anheben, verfahren und handhaben einer Kassette 3 ausserhalb der Wanne 2, insbesondere auch von und zu einer Vorrichtung 18 zum Entformen/Einformen am stirnseitigen Wannenrand Fig. 1).

Der Kassettenpresse 1 ist eine erfindungsgemässe Vorrichtung 18 zur Handhabung der Käselaibe K zugeordnet, mit einer Einrichtung zum drehen/wenden der Kassette 3 um deren Längsachse (Wendeeinheit 8) und sie ist zudem mit einem, nahe zur Wendeeinheit 8 angeordneten Rüttler 7 versehen. Sie umfasst auch eine Förderstrecke 6 für Senkundärformen 14.

Die Vorrichtung 18 umfasst des weiteren einen schwenkfähig gelagerten, der Förderstrecke 6 zugeordneten Schwenk- oder Wendegreifer, der mit mindestens einem Abholstempel 16 und Einrichtungen zum Spannen der Käselaibe K versehen ist.

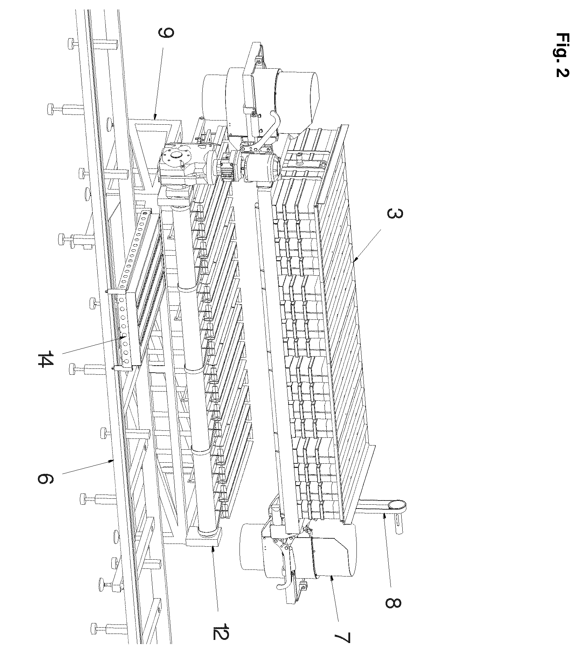

Die Vorrichtung 18 zur Handhabung der Käselaibe K mit einem Schwenkgreifer 12 gemäss Fig. 2 umfasst einen Rahmen 9 zur Aufnahme des Rüttlers 7 und der Wendeeinheit 8. Sie weist ebenfalls je einen Abholstempel 16 für jede Form 4 auf. Heben und Senken der Kassetten 3 ermöglicht das Handlinggerät 5 in der Kassettenpresse 1.
Der Schwenkgreifer 12 ist mit einem Schwenkarm im Rahmen 9 zwischen der Förderstrecke 6 und dem Rüttler 7 drehbar gelagert angeordnet. Der Schwenkarm des Schwenkgreifers 12 ist mit dem Spannrahmen 10 und den darin angebrachten Spannbacken 11 um eine Drehachse 17 schwenkbar.
Der Vorrichtung 18 ist eine Förderstrecke 6 zugeordnet.

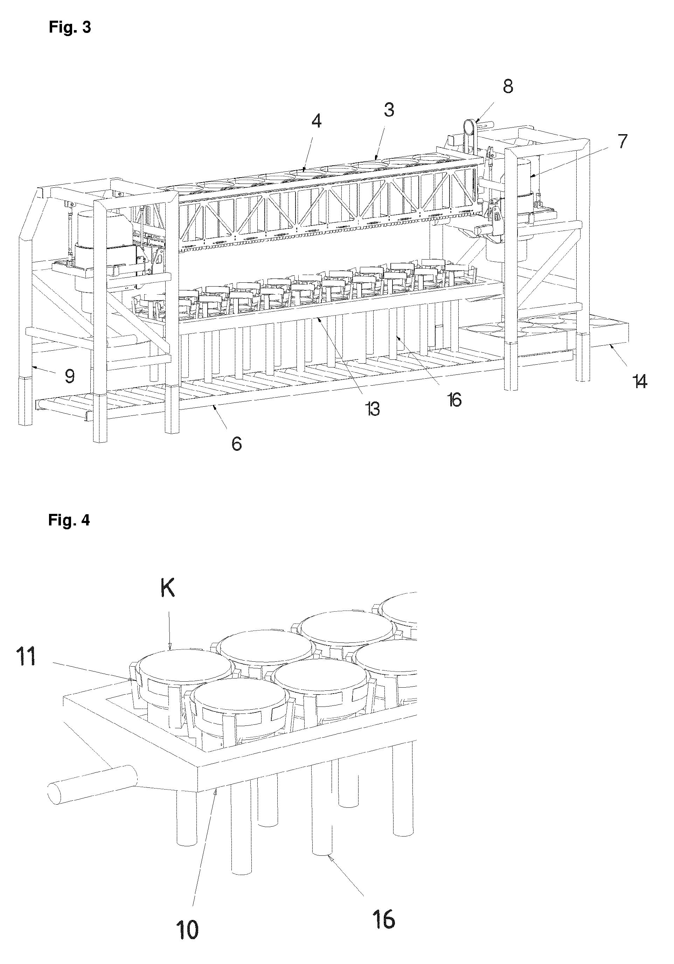

Die Vorrichtung 18 zur Handhabung der Käselaibe K mit einem Wendegreifer 13 gemäss Fig. 3 erfordert gegenüber dem Schwenkgreifer 12 einen grösseren Abstand zwischen Drehachse 17 des Greifers und der Förderstrecke 6 und umfasst einen Rahmen 9' zur Aufnahme des Rüttlers 7 und der Wendeeinheit 8, wobei die zu handhabende Kassette 3 in den Rüttler 7 abgesenkt wird. Der Wendegreifer 13 ist im Rahmen 9' zwischen der Förderstrecke 6 und der abzusenkenden Kassette 3 drehbar gelagert angeordnet. Der Wendegreifer 13 ist um eine Drehachse 17 schwenkbar.
Mit dem Abholstempel 16 können die Käselaibe K in die Sekundärformen 14 gedrückt werden.

Die Senkundärformen 14 mit der Förderstrecke 6 sind unterhalb des Wendegreifers 13 im Rahmen 9' angeordnet und werden in den Ausführungsformen mit Wendegreifer 13 und Schwenkgreifer 12 in der Regel parallel zugeführt.

Schwenk- oder Wendegreifer 12, 13 sind bevorzugt mit einem Getriebemotor, insbesondere einem Kegelrad- Getriebemotor versehen.

Die Vorrichtung 18 umfasst auch Mittel zum Spannen der Käselaibe K, vorzugsweise Spannbacken 11, die in einem Spannbalken 10 angeordnet sein können. Die Spannbacken 11 werden vorzugsweise gemeinsam über den Spannbalken 10 betätigt (Fig. 4).
Abholstempel 16 und Spannbacken 11 sind vorzugsweise pneumatisch betätigbar.

Zur Durchführung des Entleerens der Formen 4 einer Kassette 3 und der Umlagerung der Käselaibe K mittels Schwenkgreifer 12 (Fig. 2) wird die zu den Käselaiben K gepresste Käserohmasse mittels rütteln oder Luft von der Innenwand der Form 4 gelöst und nach einem Wendevorgang aus der Form 4 entleert. Hierzu wird die Kassette 3 mit den Formen 4 oberhalb des Schwenkgreifers 12 gedreht und in Richtung der Abholstempel 16 abgesenkt. Je ein Abholstempel 16 fährt in eine Form 4 der Kassette 3 mit geringem Abstand an den Käselaib K anliegend ein resp. aus der Vorrichtung 18 aus und der Rüttelvorgang wird ausgeführt.
Oder der Käse wird durch einblasen von Luft von der Formwand gelöst.
Erst nach dem Rütteln oder Ausblasen liegt der Käselaib direkt auf dem Abholstempel 16 auf.
Nach dem Rütteln wird die Form 4 resp. die Kassette 3 mit den Formen 4 angehoben, wieder um 180° in ihre Ausgangslage gedreht und entleert in die Kassettenpresse 1 zurückgeführt.

Der Abholstempel 16 wird nun mit dem aufliegenden Käselaib K gesenkt, und jeder Käselaib K wird mittels der zugeordneten Spannbacken 11 auf dem Abholstempel 16 fixiert, so dass die Käselaibe K mittels des Schwenkgreifers 12 um 180° zu einer Sekundärform 14 hin geschwenkt und in diese eingestossen werden.

Anschliessend werden die Spannbacken 11 wieder geöffnet, die Abholstempel 16 eingefahren und die Spannbacken 11 schwenken mit dem Schwenkgreifer 12 in ihre Ausgangslage zurück.
Die gefüllten Sekundärformen 14 werden in der Förderstrecke 6 zu einer anderen Arbeitsstation verfahren und es werden leere Sekundärformen 14 bereitgestellt.

Zur Durchführung des Entleerens der Formen 4 und der Umlagerung der Käselaibe K mittels Wendegreifer 13 (Fig. 3) wird die zu den Käselaiben K gepresste Käserohmasse ebenfalls nach einem Wendevorgang aus der Form 4 entleert. Hierzu wird die Kassette 3 oberhalb des Wendegreifers 13 gedreht und in Richtung der Abholstempel 16 abgesenkt. Je ein Abholstempel 16 fährt in eine Form 4 der Kassette 3 bis an den Käselaib K anliegend ein resp. aus der Vorrichtung 18 aus und der Rüttel- oder Ausblasvorgang wird ausgeführt.

Nach dem Rütteln oder Ausblasen wird die Form 4 resp. die Kassette 3 mit den Formen 4 angehoben, wieder um 180° in ihre Ausgangslage gedreht und entleert in die Kassettenpresse 1 zurückgeführt.
Der Abholstempel 16 wird nun mit dem aufliegenden Käselaib K gesenkt, und jeder Käselaib K wird mittels der zugeordneten Spannbacken 11 fixiert, so dass jeder Käselaib K um 180° im Wendegreifer 13 zu einer Sekundärform 14 hin gedreht und mittels Abholstempel 16 in diese eingestossen wird.
Anschliessend werden die Spannbacken 11 wieder geöffnet, die Abholstempel 16 eingefahren und die Spannbacken 11 drehen mit dem Wendegreifer 13 wieder um 180° in ihre Ausgangslage zurück.

Die Rüttelbewegung wird bevorzugt horizontal ausgeführt und erfolgt mindestens einmal, wobei der Käselaib K nach dem Rütteln oder Ausblasen aus der Form 4 entnommen werden kann.

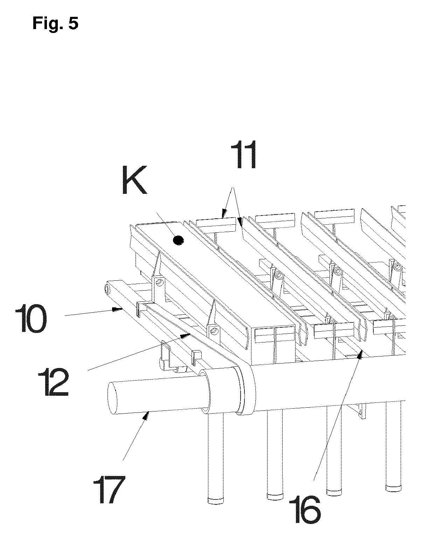

Die Käselaibe K sind sowohl in der Vorrichtung 18 als auch in den Sekundärformen 14 definiert gelagert und es ist kein manueller Zugriff erforderlich. Ein Schwenkgreifer 12 ist auch für die Handhabung sehr langer und schmaler Käselaibe K einsetzbar (Fig. 5). Schwenk- und Wendegreifer 12, 13 sind aber grundsätzlich für alle Käseformen einsetzbar.

Der verwendete Begriff des ein- und ausfahrens ist immer funktionsbezogen, nicht jedoch in Bezug auf den Zylinder gemeint.

### Bezugszeichen

- 1: Kassettenpresse
- 2: Wanne
- 3: Kassette
- 4: Form
- 5: Handlinggerät
- 6: Förderstrecke
- 7: Rüttler
- 8: Wendeeinheit
- 9: Rahmen
- 10: Spannbalken
- 11: Spannbacken
- 12: Schwenkgreifer
- 13: Wendegreifer
- 14: Sekundärform
- 15: Ausstosser
- 16: Abholstempel (Ausstosser)
- 17: Drehachse
- 18: Vorrichtung
- K: Käselaib

## Patentansprüche

1. Verfahren zur Handhabung von Käselaiben, insbesondere von Käselaiben, die vorgängig aus einer Käserohmasse in Formen (4) einer Kassettenpresse, die bevorzugt in einer Kassette (3) angeordnet sind, gepresst wurden, die gepresste Käserohmasse anschliessend von der Innenwand der Form (4) gelöst und nach einem Wendevorgang aus der Form (4) entleert wird, wozu die Form (4) gedreht, gesenkt und gerüttelt oder ausgeblasen wird,
**dadurch gekennzeichnet, dass**
a) vordem Rütteln oder Ausblasen ein Abholstempel (16) in die Form (4) bis an den Käselaib einfährt, wobei vorgängig die Form (4) resp. die Kassette (3) mit der Form (4) gedreht und abgesenkt wird und nach dem Rütteln der Abholstempel (16) mit dem aufliegenden Käselaib (K) aus der Form (4) ausfährt,
b) die Form (4) resp. Kassette (3) nachfolgend angehoben, in ihre Ausgangslage gedreht und in die Käsepresse zurückgeführt wird,
c) der Abholstempel (16) mit dem Käselaib (K) gesenkt wird,
d) der Käselaib (K) mittels einer Spanneinheit auf dem Abholstempel (16) fixiert wird,
e) der Käselaib um 180° zu einer Sekundärform (14) hin geschwenkt oder gedreht und in diese geführt wird, und
f) die Spanneinheit anschliessend geöffnet wird und der Abholstempel (16) eingefahren wird.

2. Verfahren nach Anspruch 1, **dadurch gekennzeichnet, dass** die Rüttelbewegung horizontal oder vertikal ausgeführt wird und mindestens einmal erfolgt.

3. Verfahren nach Anspruch 1 oder 2, **dadurch gekennzeichnet, dass** der Käselaib aus der Form (4) gerüttelt oder ausgeblasen wird.

4. Verfahren nach einem der Ansprüche 1 bis 3, **dadurch gekennzeichnet, dass** der Käselaib im Schritt e) mit dem Abholstempel (16) in die Sekundärform (14) gestossen wird.

5. Verfahren nach einem der Ansprüche 1 bis 4, **dadurch gekennzeichnet, dass** das Schwenken des Käselaibs gemäss Schritt e) mit einem Schwenkgreifer (12) oder einem Wendegreifer (13) erfolgt.

6. Verfahren nach einem der Ansprüche 1 bis 5, **dadurch gekennzeichnet, dass** der Schwenk- oder Wendegreifer (12, 13) nach dem Ausfahren des Abholstempels (16) gemäss Schritt f) um 180° in seine Ausgangslage dreht.

7. Verfahren nach Anspruch 1, **dadurch gekennzeichnet, dass** die Form (4) in einen Rüttler (7) abgesenkt wird.

8. Vorrichtung zur Handhabung von Käselaiben, insbesondere von Käselaiben, die aus einer Käserohmasse in Formen (4) einer Kassettenpresse (1) gepresst werden, wobei mindestens eine und bevorzugt mehrere Formen (4) in einer Kassette (3) angeordnet sind und die Vorrichtung der Kassettenpresse (1) zugeordnet ist und dass Einrichtungen zum Rütteln, Anheben, Senken und Drehen der Formen (4) resp. Kassette (3) vorgesehen sind, wobei die Einrichtungen zum Rütteln einer horizontal angeordneten Ablage oder Förderstrecke (6) zugeordnet sind,
**dadurch gekennzeichnet, dass** die Vorrichtung einen schwenkfähig gelagerten, der Förderstrecke (6) zugeordneten Greifer umfasst, der mit mindestens einem Abholstempel (16) und Einrichtungen zum Spannen der Käselaibe (K) versehen ist.

9. Vorrichtung nach Anspruch 8, **dadurch gekennzeichnet, dass** der Greifer ein Schwenkgreifer (12) ist, der zwischen der Förderstrecke (6) und der Einrichtung zum Rütteln drehbar gelagert angeordnet ist.

10. Vorrichtung nach Anspruch 8, **dadurch gekennzeichnet, dass** der Greifer ein Wendegreifer (13) ist, der zwischen der Förderstrecke (6) und den Formen (4) resp. der Kassette (3) drehbar gelagert angeordnet ist.

11. Vorrichtung nach einem der Ansprüche 8 bis 10, **dadurch gekennzeichnet, dass** die Einrichtung zum Spannen der Käselaibe (K) Spannbacken (11) umfasst.

12. Vorrichtung nach einem der Ansprüche 8 bis 11, **dadurch gekennzeichnet, dass** Abholstempel (16) und Spannbacken (11) vorzugsweise pneumatisch betätigbar sind.

13. Vorrichtung nach einem der Ansprüche 8 bis 12, **dadurch gekennzeichnet, dass** der Schwenk- oder Wendegreifer (12, 13) mit einem Getriebemotor versehen ist.
